# EUROPÄISCHE PATENTSCHRIFT

(11) **EP 3 804 096 B1**
(45) Veröffentlichungstag und Bekanntmachung des Hinweises auf die Patenterteilung: **06.05.2026**
(21) Anmeldenummer: 19728672.7
(22) Anmeldetag: 04.06.2019
(51) Int. Cl.: H02K 5/04, H02K 11/33, H02K 5/10, H02K 15/14, H02K 7/14

(54) **ELEKTROMECHANISCHE KRAFTFAHRZEUGLENKUNG AUFWEISEND MITTELS EINES KEGELFÖRMIGEN PRESSVERBANDS VERBUNDENE GEHÄUSETEILE**
ELECTROMECHANICAL MOTOR VEHICLE STEERING SYSTEM COMPRISING HOUSING PARTS THAT ARE INTERCONNECTED BY MEANS OF TAPERED INTERFERENCE FIT
DIRECTION DE VÉHICULE AUTOMOBILE ÉLECTROMÉCANIQUE COMPORTANT DES ÉLÉMENTS DE BOÎTIER RELIÉS PAR UN JOINT À AJUSTEMENT SERRÉ CONIQUE

(30) Priorität: 05.06.2018 DE 102018113302
(43) Veröffentlichungstag der Anmeldung: 14.04.2021
(73) Patentinhaber: thyssenkrupp Presta AG, 9492 Eschen (LI); thyssenkrupp AG, 45143 Essen (DE)
(72) Erfinder: BLANK, Katrin, 6822 Satteins (AT); SCHWEITZER, Dominik, 9462 Eschen (LI)
(74) Vertreter: thyssenkrupp Intellectual Property GmbH
(86) Internationale Anmeldenummer: PCT/EP2019/064471
(87) Internationale Veröffentlichungsnummer: WO 2019/234013

(56) Entgegenhaltungen:
- EP-A2- 1 919 037
- US-A- 4 017 964
- US-A1- 2016 036 299
- US-A1- 2016 094 104
- US-A1- 2017 302 121

## Beschreibung

Die vorliegende Erfindung betrifft eine elektromechanische Kraftfahrzeuglenkung mit den Merkmalen des Oberbegriffs des Anspruchs 1 und ein Verfahren zum Verbinden von Gehäuseteilen einer elektromechanischen Kraftfahrzeuglenkung mit den Merkmalen des Oberbegriffs des Anspruchs 10.

Elektromechanische Kraftfahrzeugservolenkungen weisen Servoeinheiten auf, die als Hilfskraftunterstützungseinrichtung an einem Ritzel oder einer Zahnstange des Lenkgetriebes angeordnet sein können. Die Servoeinheit weist dabei neben einem Elektromotor eine zur Berechnung der Lenkunterstützung elektronische Steuereinheit (ECU) auf. Die Gehäuseteile der Bauteile müssen eine ausreichend stabile Verbindung aufweisen, die idealerweise eine geschlossene ECU ermöglicht. Zudem ist es wünschenswert, dass das Powerpack, umfassend den Motor und die ECU, zylindrisch ist, damit es möglichst variabel einsetzbar ist.

Aus dem Stand der Technik ist es bekannt, beispielsweise aus der Offenlegungsschrift US 2016 065 027 A1, ein mehrteiliges Elektromotorgehäuse, welches mit einem ECU-Gehäuse verbunden ist, über mehrere Bolzen mechanisch zu verbinden. Als nachteilig erweist sich diese Lösung, da über undichte Bereiche Schmutz und Wasser eindringen und die Komponenten schädigen kann. Weiterhin wird für eine derartige Verbindung viel Bauraum benötigt.

Aus dem Stand der Technik ist es zudem bekannt, das ECU-Gehäuse in das Elektromotorgehäuse mittels einer zylindrischen Pressverbindung einzubringen. Beim Fügen von Motorgehäuse und ECU-Gehäuse treten sehr hohe Prozesskräfte auf, die verhindern, dass gleichzeitig auch andere Fügeprozesse (z. B. von Steckkontakten für die elektrische Verbindung) sicher durchgeführt und überwacht werden können. Zudem muss die Länge der Pressverbindung ausreichend groß gewählt werden, damit die gewünschte Stabilität der Verbindung erreicht werden kann.

Aus der EP 1 919 037 A2 ist es bekannt, zwei Gehäuseteile einer elektromechanischen Kraftfahrzeuglenkung mittels eines Pressverbands zu verbinden. Zur Erzeugung des Pressverbands müssen jedoch enge Toleranzen eingehalten werden, was fertigungstechnisch aufwendig ist. Die Abdichtung erfordert zusätzlichen Aufwand. Aus der US 4,017,964 A ist eine Ausbildung des Pressverbands als Kegelpressverband bekannt.

Es ist Aufgabe der vorliegenden Erfindung ein Verfahren zur Herstellung einer verbesserten mechanischen Verbindung zwischen den Gehäuseteilen einer elektromechanischen Kraftfahrzeugservolenkung anzugeben, das eine stabile, kompakte und dichte Verbindung ermöglicht, die in ihrer Herstellung einfach und gut überwachbar ist.

Diese Aufgabe wird von einer elektromechanischen Kraftfahrzeuglenkung mit den Merkmalen des Anspruchs 1 und einem Verfahren zum Verbinden von Gehäuseteilen einer elektromechanischen Kraftfahrzeuglenkung mit den Merkmalen des Anspruchs 8 gelöst. Vorteilhafte Weiterbildungen ergeben sich aus den Unteransprüchen.

Demnach ist eine elektromechanische Kraftfahrzeuglenkung umfassend einen Elektromotor und eine elektronische Steuereinheit, vorgesehen, wobei die elektromechanische Kraftfahrzeuglenkung zumindest teilweise von Gehäuseteilen umgeben ist, und mindestens zwei der Gehäuseteile mittels eines Pressverbands verbunden sind, der Pressverband zumindest teilweise ein Kegelpressverband ist, der mittels zweier korrespondierender kegeliger Fügeflächen gebildet ist, die einen Einstellwinkel bilden. Der Pressverband ist bevorzugt ein Längspressverband. Erfindungsgemäß ist vorgesehen, dass der Einstellwinkel in einem Bereich von 0,5°-5° liegt.

Der Kegelpressverband ermöglicht eine stabile, kompakte und dichte Verbindung der beiden Gehäuseteile. Die auftretenden Prozesskräfte sind deutlich geringer als bei einer rein zylindrischen Pressverbindung. Dies hat den Vorteil, dass andere Fügeprozesse sicherer durchgeführt und überwacht werden können. Zudem können unempfindliche Teile der ECU in den durch die Pressverbindung entstehenden Raum gelegt werden, wodurch ein kompaktes Design des Powerpacks erzielt werden kann.

Der Kegelpressverband ist mittels zweier korrespondierenden kegeligen Fügeflächen gebildet, die einen Einstellwinkel grösser 0° annehmen, der erfindungsgemäß in einem Bereich von 0,5°-5°, insbesondere in einem Bereich von 1°-3° liegt. Der Einstellwinkel der beiden Fügeflächen stimmt bevorzugt überein. Es ist vorteilhaft, wenn der Pressverband ein Übermaß aufweist. Das Übermaß ist von dem Fügeweg und dem Einstellwinkel abhängig.

In einer bevorzugten Ausführungsform ist der Pressverband ausschließlich ein Kegelpressverband mit einem Fügeweg umfassend einen kraftlosen Fügeweg und einen Aufschubweg, wobei der kraftlose Fügeweg größer ist als der Aufschubweg. Der Fügeweg beschreibt die komplette axiale Eindringtiefe des einen Gehäuseteils in das jeweilige andere Gehäuseteil. Dies hat den Vorteil, dass die Fügekraft erst am Ende des Fügewegs ansteigt. Andere Fügevorgänge können insbesondere während des kraftlosen Fügewegs kontrolliert durchgeführt werden. Das Übermaß lässt sich bevorzugt mittels des Aufschubwegs einstellen, wobei der Aufschubweg den letzten oder abschliessenden Teil des axialen Fügewegs beschreibt, den das lose auf dem ersten Gehäuseteil sitzende zweite Gehäuseteil zurücklegen muss, um in die Position des Pressverbandes zu gelangen.

Die axiale Relativverschiebung (Aufschub) der zu fügenden Gehäuseteile führt zu Querdehnungen und damit zum Aufbau eines entsprechenden Fugendruckes in den Wirkflächen. Infolge des Übermaßes wird somit eines der Gehäuseteile im Bereich einer Öffnung aufgeweitet. Dadurch wird eine Flächenpressung in den Reibflächen erzeugt.

Die Länge des kraftlosen Fügeweges hängt von der Wahl des Einstellwinkels ab. Je größer der Winkel, desto größer der kraftlose Fügeweg. Allerdings steigt mit steigendem Einstellwinkel auch die Fügekraft, während die Lösekraft sinkt. Es wird ein optimaler Kompromiss mit möglichst großer Lösekraft, möglichst kleiner Fügekraft und möglichst großem kraftlosem Fügeweg angestrebt.

Bevorzugt nimmt der kraftlose Fügeweg mehr als 60% des gesamten Fügewegs ein, weiter bevorzugt mehr als 70% des gesamten Fügewegs ein. Bevorzugt nimmt der Aufschubweg mehr als 8% und weniger als 30% des gesamten Fügewegs ein.

Es ist vorteilhaft, wenn ein Innenteil der mittels des Pressverbands verbundenen Gehäuseteile einen umlaufenden Absatz aufweist, der den Fügeweg begrenzt.

In einer anderen vorteilhaften Ausführungsform ist der Pressverband in Längsrichtung oder Axialrichtung eine Kombination aus zylindrischer Pressverbindung und Kegelpressverband. Die zufügenden Fügeflächen lassen sich einfacher herstellen. Zudem kann in diesem Fall im Bereich der zylindrischen Pressverbindung eine ringförmige Nut mit eingesetztem O-Ring zur Abdichtung zwischen den Gehäuseteilen vorgesehen sein. Bevorzugt liegt der zylindrische Bereich zwischen 5% bis 15%, wobei der restliche Bereich konisch ausgebildet ist.

Weiterhin ist ein Verfahren zum Verbinden von Gehäuseteilen einer elektromechanischen Kraftfahrzeuglenkung, umfassend einen Elektromotor und eine elektronische Steuereinheit, vorgesehen, wobei das Verfahren folgende Schritte umfasst:
- Bereitstellen zweier Gehäuseteile als Innenteil und Außenteil, wobei das Außenteil eine Öffnung mit zumindest teilweiser konischer Innenfläche aufweist, die sich in die Öffnung hineingehend verengt, und wobei das Innenteil einen korrespondierenden Kegel mit Konussitzfläche aufweist,
- Positionieren des Außenteils auf dem Innenteil und Pressen des Außenteils auf das Innenteil mit definierter, axialer Fügekraft,
wobei die korrespondierenden konischen Fügeflächen einen Einstellwinkel bilden, der erfindungsgemäß in einem Bereich von 0,5°-5° liegt.

Der Kegelpressverband ist mittels zweier korrespondierenden kegeligen Fügeflächen gebildet, die einen Einstellwinkel bilden, welcher grösser 0° ist , der erfindungsgemäß in einem Bereich von 0,5°-5°, insbesondere in einem Bereich von 1°-3° liegt. Es ist vorteilhaft, wenn der Pressverband ein Übermaß aufweist.

In einer bevorzugten Ausführungsform des Verfahrens ist der Pressverband ausschließlich ein Kegelpressverband mit einem Fügeweg, umfassend einen kraftlosen Fügeweg und einen Aufschubweg, wobei der kraftlose Fügeweg größer ist als der Aufschubweg. Bevorzugt nimmt der kraftlose Fügeweg mehr als 60% des gesamten Fügewegs ein, weiter bevorzugt mehr als 70% und besonders bevorzugt 90% des gesamten Fügewegs ein. Bevorzugt nimmt der Aufschubweg mehr als 8% und weniger als 30% des gesamten Fügewegs ein.

Es ist vorteilhaft, wenn das Innenteil der Gehäuseteile einen umlaufenden Absatz aufweist, der den Fügeweg begrenzt.

In einer anderen Ausführungsform ist der Pressverband in Längsrichtung eine Kombination aus zylindrischer Pressverbindung und Kegelpressverband.

Dabei kann im Bereich der zylindrischen Pressverbindung eine ringförmige Nut mit eingesetztem O-Ring zur Abdichtung zwischen den Fügepartner vorgesehen sein.

Vorzugsweise handelt es sich allgemein bei den mittels der zuvor beschriebenen Pressverbände verbundenen Gehäuseteilen um ein den Elektromotor umgebendes Motorgehäuse und ein die elektronische Steuereinheit umgebendes Gehäuseteil. Es können aber auch beispielsweise die Teile eines mehrteiligen Lenkgetriebegehäuses, ein Schneckengehäuse und das Motorgehäuse oder ein Sensorgehäuse und ein Ritzelgehäuse mit den Pressverbänden verbunden werden.

Nachfolgend werden zwei Ausführungsbeispiele der vorliegenden Erfindung anhand der Zeichnungen beschrieben. Gleiche Bauteile oder Bauteile mit gleichen Funktionen tragen gleiche Bezugszeichen. Es zeigen:
- Figur 1:: eine räumliche Darstellung einer elektromechanischen Servolenkung;
- Figur 2:: eine schematische Darstellung der Anordnung des Elektromotors der elektromechanischen Servolenkung an der Zahnstange,
- Figur 3:: eine räumliche Darstellung eines Gehäuses des Elektromotors mit elektronischer Steuereinheit,
- Figur 4:: eine Explosionsdarstellung des Gehäuses des Elektromotors aus Figur 3 mit elektronischer Steuereinheit,
- Fig. 5,6:: schematische Darstellungen eines Fügevorgangs eines Gehäuses eines Elektromotors mit einem Gehäuse einer Steuereinheit, sowie
- Figur 7:: eine weitere Ausführungsform einer Kegelpressverbindung zwischen einem Gehäuse eines Elektromotors und einem Gehäuse einer Steuereinheit.

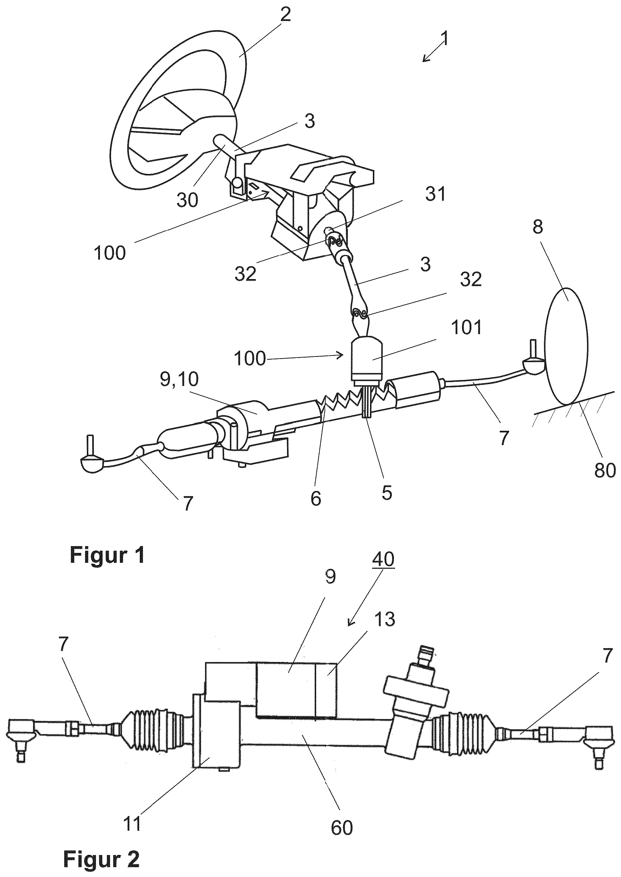

In der Figur 1 ist eine elektromechanische Kraftfahrzeugservolenkung 1 mit einem Lenkrad 2, das mit einer Lenkwelle 3 drehfest gekoppelt ist, schematisch dargestellt. Über das Lenkrad 2 bringt der Fahrer ein entsprechendes Drehmoment als Lenkbefehl in die Lenkwelle 3 ein. Das Drehmoment wird dann über die Lenkwelle 3 auf ein Lenkritzel 5 übertragen. Das Ritzel 5 kämmt in bekannter Weise mit einem Zahnsegment einer Zahnstange 6. Das Lenkritzel 5 bildet zusammen mit der Zahnstange 6 ein Lenkgetriebe 40.

Die Lenkwelle 3 weist eingangsseitig eine mit dem Lenkrad 2 verbundene Eingangswelle 30 und ausgangsseitig eine mit der Zahnstange 6 über das Lenkritzel 5 verbundene Ausgangswelle 31 auf. Die Eingangswelle 30 und die Ausgangswelle 31 sind drehelastisch über einen in der Figur 1 nicht dargestellten Drehstab miteinander verbunden. Ein vom Fahrer über das Lenkrad 2 in die Eingangswelle 30 eingeleitetes Drehmoment führt zu einer Relativdrehung der Eingangswelle 30 bezüglich der Ausgangswelle 31. Diese Relativdrehung zwischen Eingangswelle 30 und Ausgangswelle 31 kann über einen Drehwinkelsensor ermittelt werden.

Die Lenkwelle 3 gemäß Figur 1 umfasst weiterhin ein oder mehrere kardanische Gelenke 32, mittels welchen der Verlauf der Lenkwelle 3 im Kraftfahrzeug an die räumlichen Gegebenheiten angepasst werden kann. Die Lenkzwischenwelle der Lenkwelle 3, die in dem dargestellten Beispiel zwischen zwei kardanischen Gelenken 32 angeordnet ist und die die Ausgangswelle 31 mit dem Lenkritzel 5 des Lenkgetriebes 40 verbindet, ist als längenveränderbare Lenkwelle 3 ausgebildet.

Die Zahnstange 6 ist in einem Lenkungsgehäuse 60 in Richtung ihrer Längsachse verschieblich gelagert. An ihrem freien Ende ist die Zahnstange 6 mit Spurstangen 7 über nicht dargestellte Kugelgelenke verbunden. Die Spurstangen 7 selbst sind in bekannter Weise über Achsschenkel mit je einem gelenkten Rad 8 des Kraftfahrzeugs verbunden. Eine Drehung des Lenkrades 2 führt über die Verbindung der Lenkwelle 3 und des Ritzels 5 zu einer Längsverschiebung der Zahnstange 6 und damit zu einer Verschwenkung der gelenkten Räder 8. Die gelenkten Räder 8 erfahren über eine Fahrbahn 80 eine Rückwirkung, die der Lenkbewegung entgegenwirkt. Zum Verschwenken der Räder 8 ist folglich eine Kraft erforderlich, die ein entsprechendes Drehmoment am Lenkrad 2 erforderlich macht. Eine Servoeinheit 10 aus einem Elektromotor 9 und einer elektronischen Steuereinheit 13 ist vorgesehen, um dem Fahrer bei dieser Lenkbewegung zu unterstützen. Die Servoeinheit 10 kann dabei entweder mit einer Lenkwelle 3, dem Lenkritzel 5 oder der Zahnstange 6 gekoppelt sein. Die jeweilige Hilfskraftunterstützung trägt ein Hilfskraftmoment in die Lenkwelle 3, das Lenkritzel 5 und/oder in die Zahnstange 6 ein, wodurch der Fahrer bei der Lenkarbeit unterstützt wird. Die drei unterschiedlichen in Figur 1 dargestellten Hilfskraftunterstützungen 10, 100, 101 zeigen alternative Positionen für deren Anordnung. Üblicherweise ist nur eine einzige der gezeigten Positionen mit einer Hilfskraftunterstützung belegt. Die Servoeinheit kann dabei als Überlagerungslenkung an der Lenksäule oder als Hilfskraftunterstützungseinrichtung an dem Ritzel 5 oder der Zahnstange 6 angeordnet sein.

In der Figur 2 ist eine elektromechanische Kraftfahrzeuglenkung 1 mit einem Elektromotor 9 dargestellt, der auf eine Kugelmutter eines Kugelgewindetriebs 11 wirkt. In Figur 2 ist lediglich das Gehäuse des Kugelgewindetriebs und des Lenkgetriebes 40 dargestellt. Die Kugelmutter steht über umlaufende Kugeln mit einem Kugelgewinde in Eingriff, welches am äußeren Umfang der Zahnstange 6 angeordnet ist. Eine Drehung der Kugelmutter bewirkt eine axiale Verlagerung der Zahnstange 6, wodurch eine Lenkbewegung des Fahrers unterstützt wird. Bevorzugt ist der Kugelgewindetrieb 11 über einen Zahnriemen mit dem Elektromotor 9 gekoppelt.

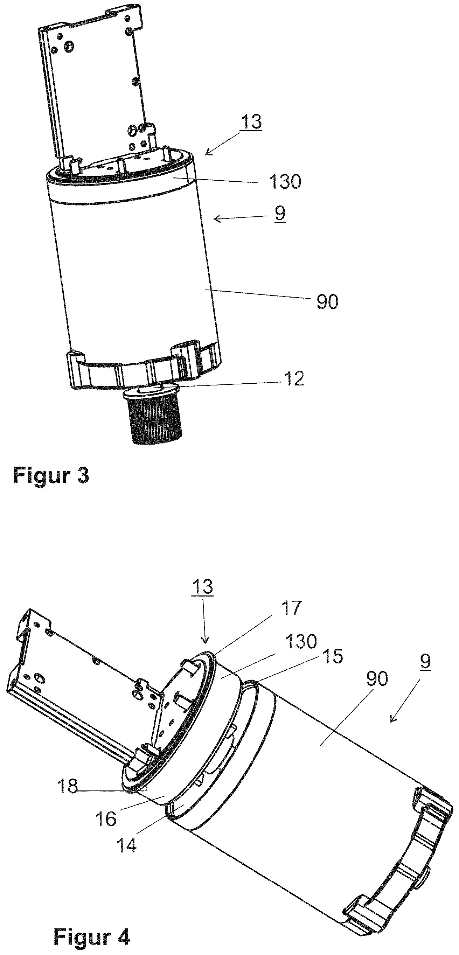

Figur 3 zeigt den Elektromotor 9 mit der Motorwelle 12 und eine mit dem Elektromotor 9 verbundene elektronische Steuereinheit (ECU) 13. In einem Motorgehäuse 90 ist der Elektromotor 9 aufgenommen. Das Motorgehäuse 90 des Elektromotors 9 ist mit einem Gehäuseteil 130 der elektronischen Steuereinheit 13 mittels einer Pressverbindung verbunden.

Wie in Figur 4 dargestellt, weist das Motorgehäuse 90 des Elektromotors 9 eine Öffnung 14 an einer Stirnseite 15 auf, in die das Gehäuseteil 130 der ECU 13 eingepresst wird. Das Gehäuseteil 130 weist einen Kegel 16 mit einer umlaufenden Sitzfläche 20 auf, die von einem umlaufenden Absatz 17 am motorfernen Ende begrenzt ist. Der Absatz 17 dient bei dem Fügevorgang als Anschlag. Der Absatz 17 definiert somit den Fügeweg. Im eingepressten Zustand liegt der Absatz 17 mit der Unterseite 18 in Anlage mit der Stirnseite 15 des Motorgehäuses 90.

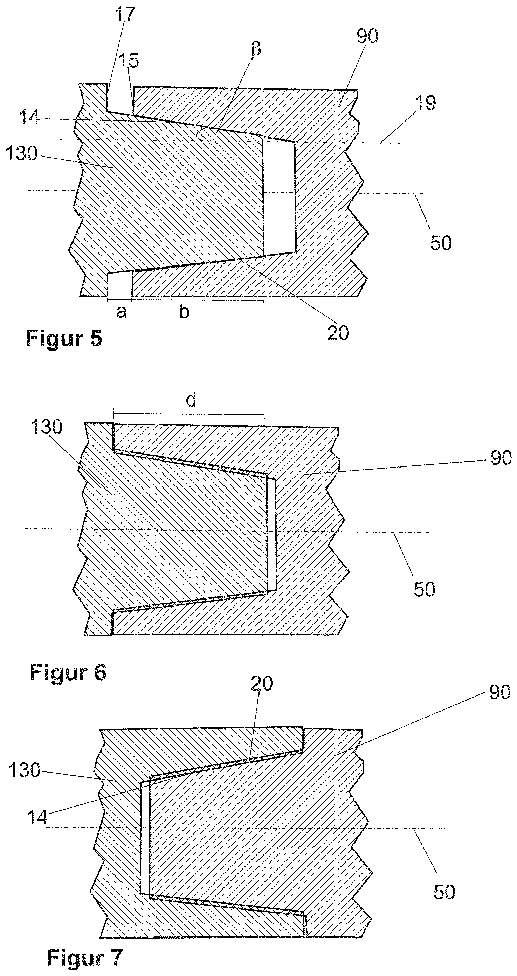

Die Figuren 5 und 6 zeigen schematisch einen Fügeprozess zwischen Motorgehäuse 90 und Gehäuseteil 130 der ECU 13. Das Motorgehäuse 90 weist in der oberen, der elektronischen Steuereinheit 13 nahen Stirnseite 15 die Öffnung 14 auf, in die sich das die elektronische Steuereinheit umgebende Gehäuseteil 130 einsetzen lässt. Die Öffnung 14 ist konisch ausgestaltet und erweitert sich in Richtung der Stirnfläche 15. In anderen Worten, die Innenfläche 19 ist eine kegelige Füge- und Wirkfläche mit einem Einstellwinkel β (halber Kegelwinkel). Das Gehäuseteil 130 der elektronischen Steuereinheit weist eine korrespondierende Konussitzfläche 20 zur Herstellung einer Kegelpressverbindung auf. An die Konussitzfläche 20 schließt sich der ringförmige Absatz 17 an, der als Anschlag beim Fügeprozess dient. Die Konussitzfläche 20 verjüngt sich vom Absatz 17 ausgehend. Der Einstellwinkel β der Innenfläche 19 und der Konussitzfläche 20 sind dabei bis auf herstellungsbedingte Abweichungen identisch, so dass es zu einer vollflächigen Anlage der beiden Flächen im Fügeprozess kommt.

Wie in Figur 5 dargestellt, erfolgt der Fügeprozess am Anfang kraftlos, bis die Konussitzfläche 20 in vollflächiger Anlage mit der Innenseite 19 der Öffnung 14 steht. Das Gehäuse der ECU 130 ist in diesem Fall in Längsrichtung 50 bereits in das Motorgehäuse 90 eingebracht worden, bevorzugt 90% des Fügewegs, wobei der Fügeweg d die komplette axiale Eindringtiefe des ECU Gehäuses 130 in das Motorgehäuse 90 beschreibt. Das Fügen der beiden Gehäuseteile 130,90 erfolgt mit einer Übermaßpassung (siehe Figur 6).

Das Übermaß lässt sich mittels des Aufschubwegs a einstellen, wobei der Aufschubweg a den letzten oder abschließenden Teil des axialen Fügewegs d beschreibt, den das lose auf dem ECU-Gehäuse 130 sitzende Motorgehäuse 90 zurücklegen muss, um in die Position des Pressverbandes zu gelangen.

Die axiale Relativverschiebung (Aufschub) der zu fügenden Teile 130,90 führt zu Querdehnungen und damit zum Aufbau eines entsprechenden Fugendruckes in den Wirkflächen. Infolge des Übermaßes wird somit das Motorgehäuse 90 im Bereich der Öffnung 14 aufgeweitet. Dadurch wird eine Flächenpressung in den Reibflächen erzeugt.

Die Länge des kraftlosen Fügeweges b hängt von der Wahl des Einstellwinkels β ab. Je größer der Winkel β, desto größer der kraftlose Fügeweg b. Allerdings steigt mit steigendem Einstellwinkel β auch die Fügekraft, während die Lösekraft sinkt. Es wird ein optimaler Kompromiss mit möglichst großer Lösekraft, möglichst kleiner Fügekraft und möglichst großem kraftlosem Fügeweg angestrebt.

Der Einstellwinkel β liegt bevorzugt in einem Bereich von 0,5°-5°, insbesondere im Bereich von 1°-3° und bevorzugt bei etwa 1°. Der kraftlose Fügeweg b ist zudem bevorzugt größer als der Aufschubweg a, so dass die benötigte Fügekraft erst am Ende des Fügeprozesses ansteigt. Bevorzugt nimmt der kraftlose Fügeweg b mehr als 60% des gesamten Fügewegs d ein, weiter bevorzugt mehr als 70% des gesamten Fügewegs d ein. Bevorzugt nimmt der Aufschubweg a mehr als 8% und weniger als 30% des gesamten Fügewegs d ein. Der Vorteil dieses späten Anstiegs der Fügekraft liegt darin, dass andere, parallel ablaufende Fügeprozesse mit geringeren Fügekräften sicher überwacht werden können. So können z. B. elektrische Steckkontakte während des Fügens eingesteckt werden und anhand der auftretenden Steckkräfte der Steckvorgang beurteilt werden.

Da der Fügeweg d durch den Absatz 17 des ECU Gehäuses 130 begrenzt ist, können andere von dem Fügeprozess abhängige Maße konstant sein, z. B. die Einstecktiefe von elektrischen Steckkontakten.

Allerdings kann so nicht bis zum Erreichen einer gewünschten Fügekraft auf Grund von Bauteiltoleranzen gefügt werden. Die Pressverbindung ist also weniger fest als im Nominalfall. Diese Verringerung der Kraft durch Toleranzen der Fügepartner muss bei der Auslegung berücksichtigt werden.

Figur 7 zeigt eine zweite mögliche Ausführungsform, in der das ECU Gehäuse 130 eine konische Öffnung 14 aufweist und das Motorgehäuse 90 eine korrespondierende Konussitzfläche 20.

In den Ausführungsformen kann auf eine Begrenzung des Fügewegs verzichtet werden. Der Fügeprozess ist dann erst beendet, wenn eine festgelegte Fügekraft erreicht ist, wodurch eine sehr gut reproduzierbare mechanische Verbindung erzielt werden kann.

Es ist auch möglich anstelle der reinkonischen Verbindung eine Kombination aus zylindrischer und konischer Pressverbindung in Axialrichtung zu verwenden. In diesem Fall weist die Innenfläche der Öffnung einen zylindrischen und einen konischen Teilbereich auf, wobei der zylindrische Teilbereich sich von der Stirnseite ausgehend nach innen erstreckt und der konische Bereich sich in Axialrichtung daran anschließt. Bevorzugt liegt der zylindrische Bereich zwischen 5% bis 15%, wobei der restliche Bereich konisch ausgebildet ist. Korrespondierend dazu weist die in die Öffnung einzusetzende Konussitzfläche ebenfalls einen zylindrischen Teilbereich und einen konischen Teilbereich auf, wobei der konische Teilbereich sich an den zylindrischen Teilbereich am fügepartnernahen Ende anschließt. Diese Kombination der Pressverbindung hat den Vorteil, dass die Fügepartner leichter zu fertigen sind und die Fertigung leichter messtechnisch überprüfbar ist. Zudem kann im zylindrischen Bereich eine ringförmige Nut zur Aufnahme eines O-Rings eingebracht werden, was die Abdichtung zwischen den Fügepartner verbessert. Beim Fügevorgang ist aufgrund des zylindrischen Bereichs kein kraftloser Fügeweg vorhanden. Die zum Fügen benötigte Kraft erhöht sich am Ende sobald der Aufschubweg erreicht wird, wenn das Übermaß zu tragen kommt, schlagartig. Der zylindrische Bereich stellt somit auch eine Lösekraft dar, wodurch die Verbindung sicherer wird. Der Fügeweg ist durch einen Anschlag der beiden zufügenden Bauteile begrenzt.

## Patentansprüche

1. Elektromechanische Kraftfahrzeuglenkung (1) umfassend einen Elektromotor (9) und eine elektronische Steuereinheit (13), wobei die elektromechanische Kraftfahrzeuglenkung (1) zumindest teilweise von Gehäuseteilen (90,130) umgeben ist, wobei mindestens zwei der Gehäuseteile (90,130) mittels eines Pressverbands verbunden sind, der zumindest teilweise ein Kegelpressverband ist, **dadurch gekennzeichnet, dass** der Kegelpressverband mittels zweier korrespondierender kegeliger Fügeflächen (19,20) gebildet ist, die einen Einstellwinkel (β) bilden, wobei der Einstellwinkel (β) in einem Bereich von 0,5°-5° liegt.

2. Elektromechanische Kraftfahrzeuglenkung (1) nach Anspruch 1, **dadurch gekennzeichnet, dass** der Pressverband ein Übermaß aufweist.

3. Elektromechanische Kraftfahrzeuglenkung (1) nach einem der vorhergehenden Ansprüche, **dadurch gekennzeichnet, dass** der Pressverband ein Kegelpressverband ist und einen Fügeweg (d) umfassend einen kraftlosen Fügeweg (b) und einen Aufschubweg (a) aufweist, wobei der kraftlose Fügeweg (b) größer ist als der Aufschubweg (a).

4. Elektromechanische Kraftfahrzeuglenkung (1) nach einem der vorhergehenden Ansprüche, **dadurch gekennzeichnet, dass** ein Innenteil (90,130) der mittels des Pressverbandes verbundenen Gehäuseteile (90,130) einen umlaufenden Absatz (17) aufweist, der den Fügeweg (d) begrenzt.

5. Elektromechanische Kraftfahrzeuglenkung (1) nach einem der vorhergehenden Ansprüche, **dadurch gekennzeichnet, dass** der Pressverband eine Kombination in Längsrichtung (50) aus zylindrischem Pressverband und Kegelpressverband ist.

6. Elektromechanische Kraftfahrzeuglenkung (1) nach Anspruch 5, **dadurch gekennzeichnet, dass** im Bereich der zylindrischen Pressverbindung eine ringförmige Nut mit eingesetztem O-Ring zur Abdichtung zwischen den Gehäuseteilen (90,130) vorgesehen ist.

7. Elektromechanische Kraftfahrzeuglenkung nach einem der vorhergehenden Ansprüche, **dadurch gekennzeichnet, dass** ein den Elektromotor (9) umgebendes Motorgehäuse (90) mit einem die elektronische Steuereinheit (13) umgebenden Gehäuseteil (130) mittels des Pressverbands verbunden ist.

8. Verfahren zum Verbinden von Gehäuseteilen einer elektromechanischen Kraftfahrzeuglenkung (1) umfassend einen Elektromotor (9) und eine elektronische Steuereinheit (13), **dadurch gekennzeichnet, dass** folgende Schritte vorgesehen sind:
• Bereitstellen zweier Gehäuseteile (90,130) als Innenteil (90,130) und Außenteil (90,130), wobei das Außenteil (90,130) eine Öffnung (14) mit zumindest teilweiser konischer Innenfläche (19) aufweist, die sich in die Öffnung (14) hineingehend verengt, und wobei das Innenteil (90,130) einen korrespondierenden Kegel (16) mit einer Konussitzfläche (20) aufweist,
• Positionieren des Außenteils (90,130) auf dem Innenteil (90,130) und Pressen des Außenteils (90,130) auf das Innenteil (90,130) mit definierter axialer Fügekraft,
wobei die korrespondierenden konischen Fügeflächen (19,20) einen Einstellwinkel (β) bilden, **dadurch gekennzeichnet, dass** der Einstellwinkel (β) in einem Bereich von 0,5°-5° liegt.

9. Verfahren nach Anspruch 8, **dadurch gekennzeichnet, dass** der Pressverband ein Übermaß aufweist.

10. Verfahren nach einem der vorhergehenden Ansprüche 8 bis 9, **dadurch gekennzeichnet, dass** der Pressverband ausschließlich ein Kegelpressverband ist und einen Fügeweg (d) umfassend einen kraftlosen Fügeweg (b) und einen Aufschubweg (a) aufweist, wobei der kraftlose Fügeweg (b) größer ist als der Aufschubweg (a).

11. Verfahren nach einem der vorhergehenden Ansprüche 8 bis 10, **dadurch gekennzeichnet, dass** das Innenteil (90,130) einen umlaufenden Absatz (17) aufweist, der den Fügeweg (d) begrenzt.

12. Verfahren nach einem der vorhergehenden Ansprüche 8 bis 11, **dadurch gekennzeichnet, dass** die beiden Gehäuseteile (90,130) ein den Elektromotor (9) umgebendes Motorgehäuse (90) und ein die elektronische Steuereinheit (13) umgebendes Gehäuseteil (130) sind.

## Claims

1. An electromechanical motor vehicle steering system (1) comprising an electric motor (9) and an electronic control unit (13), wherein the electromechanical motor vehicle steering system (1) is at least partially surrounded by housing parts (90, 130), wherein at least two of the housing parts (90, 130) are connected to one another by interference fit, which is at least partly a tapered interference fit, **characterized in that** the tapered interference fit is formed by means of two corresponding tapered joining surfaces (19, 20) which form a setting angle (β), wherein the setting angle (β) ranges from 0.5° - 5°.

2. The electromechanical motor vehicle steering system (1) as claimed in claim 1, **characterized in that** the interference fit has an oversize.

3. The electromechanical motor vehicle steering system (1) as claimed in one of the preceding claims, **characterized in that** the interference fit is a tapered interference fit and has a joining distance (d) comprising a joining distance without force (b) and a push-on distance (a), wherein the joining distance without force (b) is greater than the push-on distance (a).

4. The electromechanical motor vehicle steering system (1) as claimed in one of the preceding claims, **characterized in that** an internal part (90, 130) of the housing parts (90, 130) connected by means of the interference fit has a peripheral shoulder (17) which delimits the joining distance (d).

5. The electromechanical motor vehicle steering system (1) as claimed in one of the preceding claims, **characterized in that** in the longitudinal direction (50) the interference fit is a combination of a cylindrical interference fit and a tapered interference fit.

6. The electromechanical motor vehicle steering system (1) as claimed in claim 5, **characterized in that** an annular groove with an inserted O-ring is provided in the region of the cylindrical press connection for sealing between the housing parts (90, 130).

7. The electromechanical motor vehicle steering system as claimed in one of the preceding claims, **characterized in that** a motor housing (90) surrounding the electric motor (9) is connected to a housing part (130) surrounding the electronic control unit (13) by means of the interference fit.

8. A method for connecting housing parts of an electromechanical motor vehicle steering system (1) comprising an electric motor (9) and an electronic control unit (13), **characterized in that** the following steps are provided:
• providing two housing parts (90, 130) as an internal part (90, 130) and an external part (90, 130), wherein the external part (90, 130) has an opening (14) with an at least partially tapered internal surface (19) which tapers when it passes into the opening (14), and wherein the internal part (90, 130) has a corresponding taper (16) with a tapered seat surface (20),
• positioning the external part (90, 130) on the internal part (90, 130) and pressing the external part (90, 130) onto the internal part (90, 130) with a defined axial joining force,
wherein the corresponding tapered joining surfaces (19, 20) form a setting angle (β), **characterized in that** the setting angle (β) ranges from 0.5° - 5°.

9. The method as claimed in claim 8, **characterized in that** the interference fit has an oversize.

10. The method as claimed in one of the preceding claims 8 to 9,
**characterized in that** the interference fit is exclusively a tapered interference fit and has a joining distance (d) comprising a joining distance without force (b) and a push-on distance (a), wherein the joining distance without force (b) is greater than the push-on distance (a).

11. The method as claimed in one of the preceding claims 8 to 10,
**characterized in that** the internal part (90, 130) has a peripheral shoulder (17) which delimits the joining distance (d).

12. The method as claimed in one of the preceding claims 8 to 11,
**characterized in that** the two housing parts (90, 130) are a motor housing (90) surrounding the electric motor (9) and a housing part (130) surrounding the electronic control unit (13).

## Revendications

1. Système de direction électromécanique pour véhicule automobile (1) comprenant un moteur électrique (9) et une unité de commande électronique (13), dans lequel le système de direction électromécanique pour véhicule automobile (1) est au moins partiellement entouré par des éléments de boîtier (90, 130), dans lequel au moins deux des éléments de boîtier (90, 130) sont reliés l'un à l'autre par un ajustement serré, qui est au moins en partie un ajustement serré conique, **caractérisé en ce que** l'ajustement serré conique est formé au moyen de deux surfaces de jonction coniques correspondantes (19, 20) qui forment un angle de réglage (β), l'angle de réglage (β) étant compris entre 0,5° et 5°.

2. Système de direction électromécanique pour véhicule automobile (1) selon la revendication 1, **caractérisé en ce que** l'ajustement serré présente un surdimensionnement.

3. Système de direction électromécanique pour véhicule automobile (1) selon l'une des revendications précédentes, **caractérisé en ce que** l'ajustement serré est un ajustement serré conique et présente une distance d'assemblage (d) comprenant une distance d'assemblage sans force (b) et une distance d'enfoncement (a), la distance d'assemblage sans force (b) étant supérieure à la distance d'enfoncement (a).

4. Système de direction électromécanique (1) pour véhicule automobile selon l'une des revendications précédentes, **caractérisé en ce qu'**une partie interne (90, 130) des pièces de boîtier (90, 130) reliées au moyen de l'ajustement serré comporte un épaulement périphérique (17) qui délimite la distance d'assemblage (d).

5. Système de direction électromécanique pour véhicule automobile (1) selon l'une des revendications précédentes, **caractérisé en ce que,** dans la direction longitudinale (50), l'ajustement serré est une combinaison d'un ajustement serré cylindrique et d'un ajustement serré conique.

6. Système de direction électromécanique pour véhicule automobile (1) selon la revendication 5, **caractérisé en ce qu'**une rainure annulaire avec un joint torique inséré est prévue dans la zone de l'assemblage par ajustement serré cylindrique pour assurer l'étanchéité entre les parties de boîtier (90, 130).

7. Système de direction électromécanique pour véhicule automobile selon l'une des revendications précédentes, **caractérisé en ce qu'**un boîtier de moteur (90) entourant le moteur électrique (9) est relié à une partie de boîtier (130) entourant l'unité de commande électronique (13) au moyen de l'ajustement serré.

8. Procédé pour relier des parties de boîtier d'un système de direction électromécanique pour véhicule automobile (1) comprenant un moteur électrique (9) et une unité de commande électronique (13), **caractérisé en ce qu'**il comprend les étapes suivantes :
• fournir deux parties de boîtier (90, 130) sous la forme d'une partie interne (90, 130) et d'une partie externe (90, 130), dans lequel la partie externe (90, 130) comporte une ouverture (14) avec une surface interne (19) au moins partiellement conique qui se rétrécit lorsqu'elle pénètre dans l'ouverture (14), et dans laquelle la partie interne (90, 130) présente un cône correspondant (16) avec une surface d'appui conique (20),
• en positionnant la partie externe (90, 130) sur la partie interne (90, 130) et en appuyant la partie externe (90, 130) contre la partie interne (90, 130) avec une force d'assemblage axiale définie,
les surfaces d'assemblage coniques correspondantes (19, 20) formant un angle de serrage (β), **caractérisé en ce que** l'angle de serrage (β) est compris entre 0,5° et 5°.

9. Procédé selon la revendication 8, **caractérisé en ce que** l'ajustement serré présente un surdimensionnement.

10. Procédé selon l'une des revendications 8 à 9 précédentes, **caractérisé en ce que** l'ajustement serré est exclusivement un ajustement serré par e conique et présente une distance d'assemblage (d) comprenant une distance d'assemblage sans force (b) et une distance d'enfoncement (a), la distance d'assemblage sans force (b) étant supérieure à la distance d'enfoncement (a).

11. Procédé selon l'une des revendications 8 à 10 précédentes, **caractérisé en ce que** la partie interne (90, 130) présente un épaulement périphérique (17) qui délimite la distance d'assemblage (d).

12. Procédé selon l'une des revendications 8 à 11 précédentes, **caractérisé en ce que** les deux parties de boîtier (90, 130) sont un boîtier de moteur (90) entourant le moteur électrique (9) et une partie de boîtier (130) entourant l'unité de commande électronique (13).
